# EUROPEAN PATENT SPECIFICATION

(11) **EP 3 889 363 B1**
(45) Date of publication and mention of the grant of the patent: **03.05.2023**
(21) Application number: 19909539.9
(22) Date of filing: 24.12.2019
(51) Int. Cl.: E02F 9/24, A47C 7/62, B60N 2/90, G05G 1/04, G05G 1/30, B60W 40/08, E02F 9/16, E02F 9/26, G06Q 10/06, B60N 2/00, B60K 28/06, B60W 50/14, E02F 9/20

(54) **OPERATION CONTROL DEVICE FOR CONSTRUCTION MACHINE**
BETRIEBSSTEUERUNGSVORRICHTUNG FÜR BAUMASCHINE
DISPOSITIF DE COMMANDE DE FONCTIONNEMENT POUR ENGIN DE CHANTIER

(30) Priority: 09.01.2019 JP 2019001756
(43) Date of publication of application: 06.10.2021
(73) Proprietor: KOBELCO CONSTRUCTION MACHINERY CO., LTD., Hiroshima-shi Hiroshima 731-5161 (JP)
(72) Inventor: YAMASHITA, Koji, Hiroshima-shi, Hiroshima 731-5161 (JP)
(74) Representative: TBK
(86) International application number: PCT/JP2019/050516
(87) International publication number: WO 2020/145125

(56) References cited:
- WO-A1-2013/006639
- WO-A1-2016/152700
- JP-A- 2005 204 871
- JP-A- 2008 174 986
- JP-A- 2008 174 986
- JP-A- 2010 096 017
- JP-A- 2010 250 459
- JP-A- 2017 053 092
- JP-A- 2017 210 070
- JP-A- 2018 131 890
- US-A1- 2018 174 457

## Description

### Technical Field

The present invention relates to an operation control system for operating a construction machine.

### Background Art

Construction machines including hydraulic excavators have been conventionally known. In a work using such a construction machine, the construction machine occasionally happens to perform an operation (a false operation) unintended by an operator when a part of the operator's body, e.g., an elbow of the operator, inadvertently comes into contact with a manipulation lever contrary to an operator's intension or when the operator distractedly manipulates the manipulation lever. Therefore, techniques for preventing such a false operation and improving a safety have been proposed.

For instance, Patent Literature 1 discloses an operation control system for a working machine. The operation control system includes a sitting detector composed of a pressure sensor arranged at a seat base of an operator seat, and a holding detector composed of a touch sensor for detecting, based on a detected electrostatic capacitance, whether a manipulation lever is held by an operator. A controller outputs an electric signal to an electric application passage when the sitting detector detects a sitting state of the operator. The controller does not output the electric signal to the electric application passage when the sitting detector detects a non-sitting state of the operator. This prevents a false operation of the working machine attributed to a contact of a part of the operator's body with the manipulation part in the non-sitting state. Besides, the controller outputs the electric signal to an electric application sub-passage electrically connected to the electric application passage at a position upstream of a switch when the sitting detector detects the non-sitting state of the operator and the holding detector detects that the manipulation part is held by the operator. As a result, the operator even in a standing posture can execute a manipulation.

Patent Literature 2 discloses a distraction detection device for use in a construction machine. The distraction detection device includes: a visual direction detector for detecting a visual direction of an operator of the construction machine; a manipulation detector for detecting a manipulation applied to a manipulation part for operating the construction machine; a calculator for an input of a result of detection from each of the visual direction detector and the manipulation detector; and an operation suspending section. The visual direction detector includes a camera and an image calculation device. The image calculation device detects the visual direction by using an image taken by the camera. The calculator determines, based on the result of detection, a distraction state or not, and outputs to the operation suspending section an instruction of causing the operation suspending section to suspend the operation of the construction machine.

Meanwhile, in a work using the construction machine, a plurality of sensors like the pressure sensor and the touch sensor disclosed in Patent Literature 1 and a plurality of devices like the camera and the image calculation device disclosed in Patent Literature 2 are required to prevent both the false operation of the construction machine attributed to an inadvertent contact of a part of the operator's body or anything other than the operator with the manipulation lever contrary to an operator's intention and another false operation of the construction machine attributed to a distracted manipulation of the operator to the manipulation lever. This leads to a complicated configuration and a difficult control of the operation control system for operating the construction machine.
Additionally, JP2018131890 shows a shovel with the task to estimate a status of an operator of a shovel. Therefore, biological sensors 100a to 100c measure biological signals of an operator OP. A work kind determination section 110 determines a present work kind S. An operator status estimation section 130 stores biological information based on the biological signals in association with the present work kind, collates present biological information with past biological information stored in association with the present work kind, and estimates a present status of the operator OP.

### Citation List

### Patent Literature

Patent Literature 1: Japanese Unexamined Patent Publication No. 2008-174986
Patent Literature 2: Japanese Unexamined Patent Publication No. 2017-053092 JP2018131890

### Summary of Invention

The present invention has an object of providing an operation control system for a construction machine with a simple configuration capable of preventing a false operation of the construction machine attributed to an inadvertent contact of a part of an operator's body or anything other than the operator with a manipulation part, e.g., a manipulation lever, contrary to an operator's intension, and another false operation of the construction machine attributed to a distracted manipulation of the operator.

Provided is an operation control system for a construction machine including an attachment and a traveling device. The operation control system includes: an operator seat which allows an operator to sit thereon; a manipulation part to which a manipulation of the operator is applied to operate the construction machine; an image taking part which takes an image of the operator; a manipulation determination part which determines, based on image information concerning the image of the operator taken by the image taking part, whether the manipulation part is manipulated by the operator; a distraction determination part which determines, based on the image information concerning the image of the operator taken by the image taking part, whether the operator is distracted; and an operation control part which suspends an operation, among operations of the construction machine, corresponding to a manipulation applied to the manipulation part in at least one of a case where the manipulation determination part determines that the manipulation part is not manipulated by the operator and a case where the distraction determination part determines that the operator is distracted.

### Brief Description of Drawings

Fig. 1 is a sideview of an exemplary construction machine operatable by using an operation control system according to an embodiment of the present invention.
Fig. 2 is a perspective view showing an operator seat, a manipulation part, an image taking part, a lock mechanism, and a notification device included in the operation control system.
Fig. 3 is a block diagram showing an operative configuration of the operation control system.
Fig. 4 is a flowchart showing an arithmetic control operation to be executed by a controller of the operation control system.
Fig. 5 is a block diagram showing a system configuration of a modified operation control system.

### Description of Embodiments

Hereinafter, preferable embodiment of the present invention will be described with reference to the accompanying drawings.

### Construction machine

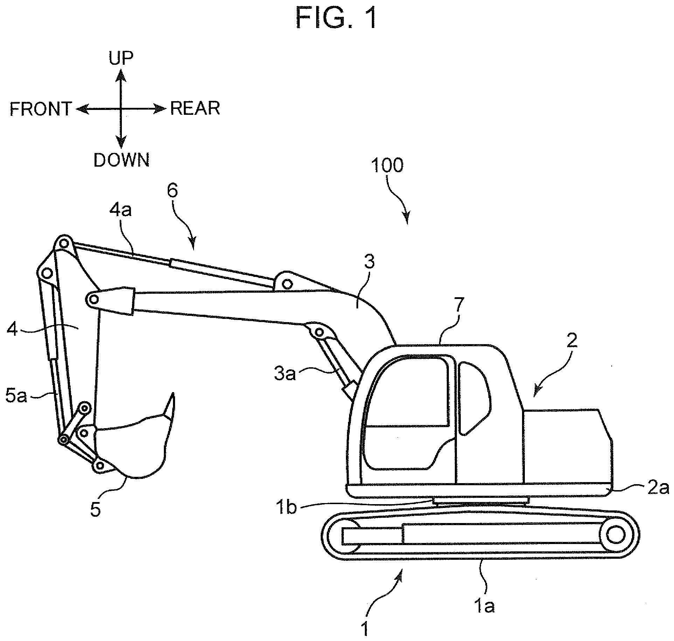

Fig. 1 is a sideview of an exemplary hydraulic excavator serving as a construction machine operatable by using an operation control system according to an embodiment of the present invention. In the drawings, directions are denoted by "UP", "DOWN", "LEFT", "RIGHT", "FRONT", and "REAR". It should be noted that each of the directions is defined for convenience to explain structures of the operation control system and the hydraulic excavator according to the embodiment of the present invention, and thus does not delimit any moving direction or use way of the hydraulic excavator.

Fig. 1 shows a hydraulic excavator 100 including a lower traveling body 1, an upper slewing body 2 slewably mounted thereon, and an attachment 6 mounted on the upper slewing body 2. The upper slewing body 2 includes a slewing frame 2a coupled to the lower traveling body 1 and a cab 7 mounted on the slewing frame 2a.

The lower traveling body 1 includes a pair of left and right traveling devices 1a, 1a, a slewing bearing 1b attached to the slewing frame 2a, and an unillustrated frame connecting the pair of traveling devices 1a, 1a with each other and supporting the slewing bearing 1b. The frame has an unillustrated vehicle body supporting the slewing bearing 1b under the slewing bearing 1b and unillustrated axles extending in a left-right direction for connecting the pair of traveling devices 1a, 1a with each other. Each of the two traveling devices 1a, 1a is of a crawler type in the embodiment, but should not be limited to the crawler type. The traveling device 1a has an unillustrated traveling motor for driving a crawler.

The attachment 6 includes a boom 3 tiltably connected to a front end of the slewing frame 2a, an arm 4 rotatably connected to a distal end of the boom 3, and a bucket 5 rotatably connected to a distal end of the arm 4. The cab 7 is mounted on a front portion of the slewing frame 2a that is adjacent to the boom 3 in the left-right direction of the slewing frame 2a, and defines an operator compartment for operating the hydraulic excavator 100.

The hydraulic excavator 100 further includes a plurality of hydraulic actuators 3a, 4a, 5a for operating the attachment 6 and an unillustrated slewing motor for slewing the upper slewing body 2. The hydraulic actuators include a boom cylinder 3a for moving the boom 3, an arm cylinder 4a for moving the arm 4, and a bucket cylinder 5a for moving the bucket 5.

### Operation control system

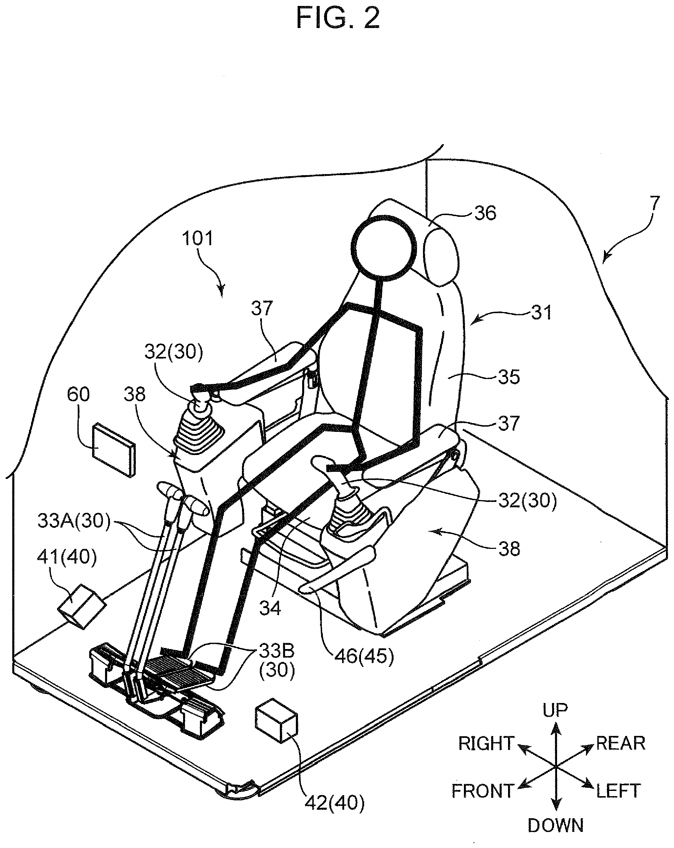

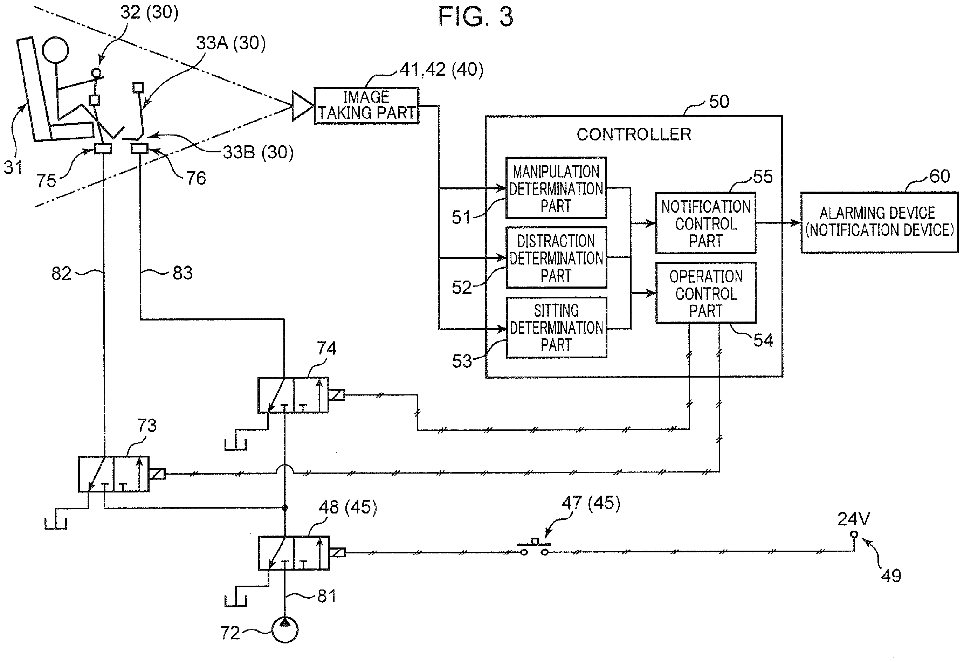

Fig. 2 is a perspective view showing an operator seat, a manipulation part, an image taking part, a lock mechanism, and a notification device included in an operation control system 101 according to the embodiment. Fig. 3 is a block diagram showing an operative configuration of the operation control system 101 according to the embodiment. The operation control system 101 is a system for operating the hydraulic excavator 100 in response to a manipulation of the operator. As shown in Fig. 2 and Fig. 3, the operation control system 101 includes a manipulation part 30, an operator seat 31, a lock mechanism 45, an image taking part 40, a notification device 60, and a controller 50.

### Manipulation part

The manipulation part 30 is applied with a manipulation of the operator to operate the hydraulic excavator 100. In the embodiment, the manipulation part 30 includes a pair of attachment manipulation levers 32, 32 (serving as an exemplary attachment manipulation section), a pair of traveling manipulation levers 33A, 33A (serving as an exemplary traveling manipulation section), and a pair of traveling manipulation pedals 33B, 33B (serving as another exemplary traveling manipulation section).

The pair of attachment manipulation levers 32, 32 is applied with a lever manipulation of the operator to operate the attachment 6. A manipulation (attachment manipulation) applied to the pair of attachment manipulation levers 32, 32 covers a boom tilting manipulation for a tilting operation of raising and lowering the boom 3 with respect to the upper slewing body 2, an arm rotational manipulation for a rotational operation of rotating the arm 4 with respect to the boom 3, a bucket rotational manipulation for a rotational operation of rotating the bucket 5 with respect to the arm 4, and an attachment slewing manipulation for a slewing operation of slewably rotating the attachment 6 by slewing the upper slewing body 2 with respect to the lower traveling body 1. The operator manipulates the pair of attachment manipulation levers 32, 32 for an operation of the attachment 6 corresponding to the manipulation.

The pair of traveling manipulation levers 33A, 33A is applied with a lever manipulation of the operator to operate the pair of traveling devices 1a, la. The pair of traveling manipulation pedals 33B, 33B is applied with a pedal manipulation of the operator to operate the pair of traveling devices 1a, 1a. The operator can cause the lower traveling body 1 to travel by manipulating the pair of traveling manipulation levers 33A, 33A, or depressing the pair of traveling manipulation pedals 33B, 33B.

Operations of the operation control system 101 by way of the manipulation part 30 will be described in detail below. As shown in Fig. 3, in the embodiment, the operation control system 101 further includes a pilot pump 72, a lock valve 48, an attachment switch valve 73 (attachment manipulation acceptance or refusal controller), a traveling switch valve 74 (traveling manipulation acceptance or refusal controller), an attachment remote control valve 75, a traveling remote control valve 76, a plurality of unillustrated attachment control valves, and an unillustrated traveling control valve.

The attachment control valves include a boom control valve for controlling a supply of a hydraulic fluid to the boom cylinder 3a, an arm control valve for controlling a supply of the hydraulic fluid to the arm cylinder 4a, and a bucket control valve for controlling a supply of the hydraulic fluid to the bucket cylinder 5a. The traveling control valve controls a supply of the hydraulic fluid to the traveling motor. Each of the attachment control valves has a pilot port to which a pilot pressure is input via the attachment remote control valve 75. The traveling control valve has a pilot port to which a pilot pressure is input via the traveling remote control valve 76. Each of the control valves is kept at a neutral position (i.e., is kept closed) to disconnect the cylinder or the traveling motor from an unillustrated hydraulic pump when no pilot pressure is input to the pilot port. Conversely, the control valve opens by shifting from the neutral position at a stroke corresponding to a pilot pressure when the pilot pressure is input to the pilot port, and allows the hydraulic fluid discharged from the hydraulic pump to flow to the cylinder or the traveling motor at a flow rate corresponding to the stroke. Consequently, the attachment 6 and the traveling device 1a are operated.

As shown in Fig. 3, the pilot pump 72 has a discharge port connected to a first pilot line 81. The lock valve 48 is located on the first pilot line 81. The first pilot line 81 bifurcates into a second pilot line 82 (attachment pilot line 82) and a third pilot line 83 (traveling pilot line 83) at a position downstream of the lock valve 48. The second pilot line 82 is connected to the attachment remote control valve 75, and the third pilot line 83 is connected to the traveling remote control valve 76. The attachment switch valve 73 is located on the second pilot line 82, and the traveling switch valve 74 is located on the third pilot line 83.

The lock valve 48 is a solenoid switch valve. The lock valve 48 closes when the lock mechanism 45 to be described later disconnects the lock valve 48 from a power source 49 to block the supply of the hydraulic fluid from the pilot pump 72 to the switch valves 73, 74. Conversely, the lock valve 48 opens in response to an excitation of a solenoid to allow the supply of the hydraulic fluid from the pilot pump 72 to the switch valves 73, 74 when the lock mechanism 45 connects the lock valve 48 and the power source 49 with each other.

Each of the switch valves 73, 74 serves as a solenoid switch valve shifting between an opening position (right position in Fig. 3) and a closing position (left position in Fig. 3) in response to an instructive signal from the controller 50 (specifically, an operation control part 54 to be described later). The attachment switch valve 73 is kept at the closing position to block the supply of the hydraulic fluid from the pilot pump 72 to the attachment remote control valve 75 when no instructive signal is input from the operation control part 54 of the controller 50 to the pilot port of the attachment switch valve 73. Conversely, the attachment switch valve 73 shifts to the opening position to allow the hydraulic fluid to flow from the pilot pump 72 to the attachment remote control valve 75 when a valve-opening instructive signal is input to the pilot port thereof from the operation control part 54 of the controller 50.

Similarly, the traveling switch valve 74 is kept at the closing position to block the supply of the hydraulic fluid from the pilot pump 72 to the traveling remote control valve 76 when no instructive signal is input from the operation control part 54 of the controller 50 to the pilot port of the traveling switch valve 74. Conversely, the traveling switch valve 74 shifts to the opening position to allow the hydraulic fluid to flow from the pilot pump 72 to the traveling remote control valve 76 when a valve-opening instructive signal is input to the pilot port thereof from the operation control part 54 of the controller 50.

### Operator seat

The operator seat 31 is arranged in the cab 7 for allowing the operator to sit thereon. The operator seat 31 includes a seat base 34, a backrest 35, a headrest 36, and a pair of left and right armrests 37, 37. The seat base 34 supports a lower body of the operator, specifically, buttocks and a part of legs (i.e., thighs) thereof. The backrest 35 supports an upper body of the operator, specifically, the back of the operator. The headrest 36 supports the head of the operator, specifically, the rear part of the head of the operator. The left and right armrests 37, 37 extend in a front-rear direction for supporting forearms of the operator when the operator manipulates the manipulation levers 32, 32 while sitting on the operator seat 31. The left and right armrests 37, 37 are arranged respectively on the left and the right sides of the seat base 34.

A pair of control boxes 38, 38 are arranged respectively on the left and the right sides of the operator seat 31. The attachment manipulation levers 32, 32 are also located respectively on the left and the right sides of the operator seat 31 in such a manner as to protrude upward from upper portions of the corresponding control boxes 38, 38.

### Lock mechanism

The lock mechanism 45 shifts between an operation permission state of permitting an operation of the hydraulic excavator 100 in response to a manipulation of the operator and an operation suspension state of suspending the operation of the hydraulic excavator 100. The lock mechanism 45 includes a lock lever 46 (see Fig. 2), the lock switch 47 (see Fig. 3), and the lock valve 48 (see Fig. 3).

As shown in Fig. 2, the lock lever 46 is, for example, a rod-like long and thin member having a proximal end attached to a lateral surface of the left control box 38 rotatably about the left control box 38. The lock lever 46 can take a first posture (shown in Fig. 2) of extending frontward from the proximal end in a substantially horizontal direction, and a second posture (not shown) of extending downward from the proximal end in a substantially vertical direction.

The lock switch 47 can shift between a connection state of electrically connecting the power source 49 and the lock valve 48 with each other and a disconnection state of electrically disconnecting the power source 49 and the lock valve 48 from each other in accordance with a change in the posture of the lock lever 46 between the first posture and the second posture. Specifically, the lock switch 47 is in the connection state when the lock lever 46 takes the first posture, and is in the disconnection state when the lock lever 46 takes the second posture.

As shown in Fig. 3, the lock valve 48 is the solenoid switch valve located on a pilot line connecting the pilot pump 72, the attachment switch valve 73, and the traveling switch valve 74 with one another. The lock valve 48 is in an excited state when the lock lever 46 takes the first posture, that is, the lock switch 47 is in the connection state. The lock valve 48 is in an unexcited state when the lock lever 46 takes the second posture, that is, the lock switch is in the disconnection state. The lock valve 48 in the excited state allows the supply of the hydraulic fluid from the pilot pump 72 to each of the attachment switch valve 73 and the traveling switch valve 74. The lock valve 48 in the unexcited state blocks the supply of the hydraulic fluid from the pilot pump 72 to each of the attachment switch valve 73 and the traveling switch valve 74.

In other words, when the operator changes the posture of the lock lever 46 to the first posture shown in Fig. 2, the lock mechanism 45 enters the operation permission state. Conversely, when the operator changes the posture of the lock lever 46 to the second posture, the lock mechanism 45 enters the operation suspension state.

### Image taking part

The image taking part 40 serves as an image taking device for taking an image of the operator. The image taking part 40 can take an image, e.g., a still image, a video image, and other image. In the embodiment, the image taking part 40 includes a plurality of cameras 41, 42. Each of the cameras 41, 42 has a predetermined viewing angle, and is configured to take an image in a field of view at the angle. Information (a video image signal) concerning the image taken by each of the cameras is input to the controller 50.

In the embodiment, the cameras include a first camera 41 and a second camera 42 having a field of view different from that of the first camera 41. As shown in Fig. 2, the first camera 41 is located in front of the operator seat 31 with the field of view extending rearward for taking an image of the operator sitting on the operator seat 31, and the pair of attachment manipulation levers 32, 32 to be manipulated by the operator. The second camera 42 is located on, for example, a lateral side of the traveling manipulation lever 33A and the traveling manipulation pedal 33B with the field of view laterally extending for taking an image of the pair of traveling manipulation levers 33A, 33A, and the pair of traveling manipulation pedals 33B, 33B.

### Notification device

The notification device 60 notifies the operator of information, specifically, determination information concerning a determination by an operation determination part to be described later. The notification device 60 may be sufficient to enable the operator to recognize the determination information, and hence the configuration thereof is not particularly limited in detail. However, the following configuration is, for example, adoptable therefor.

The notification device 60 has, for example, at least one of a sound emitter for emitting a sound, a light emitter for emitting light, and a display device for displaying a character or a shape. The notification device 60 is provided at a place recognizable by the operator, e.g., in the vicinity of the operator seat 31 in the cab 7. The sound emitter is configured to emit a sound hearable by the operator through the operator's auditory sense. For instance, the sound emitter has an unillustrated alarming buzzer and a speaker. The light emitter is configured to emit light visible by the operator through the operator's visual sense. For instance, the light emitter has an indicator lump, a revolving lump, a signal lump, or other lump. The display device is configured to display, for example, a character or a shape visible by the operator through the operator's visual sense. For instance, the display device includes a display.

### Controller

The controller 50 is composed of, for example, a computer, and operably includes a manipulation determination part 51, a distraction determination part 52, a sitting determination part 53, the operation control part 54, and a notification control part 55.

The manipulation determination part 51 determines, based on image information concerning an image of the operator taken by the image taking part 40, whether the manipulation part 30 is manipulated by the operator.

Specifically, for instance, the manipulation determination part 51 can determine whether the attachment manipulation lever 32A (or the traveling manipulation lever 33A) is held by the operator by calculating, based on the image information concerning the image of the operator taken by the image taking part 40, a position of a hand (position of a distal end of an upper limb) of the operator and comparing the position of the hand with a position of the attachment manipulation lever 32 (or a position of the traveling manipulation lever 33A). Moreover, for instance, the manipulation determination part 51 can determine whether a foot of the operator is put on the traveling manipulation pedal 33B by calculating, based on the image information concerning the image of the operator taken by the image taking part 40, a position of the foot (position of a distal end of a lower limb) of the operator and comparing the position of the foot with a position of the traveling manipulation pedal 33B. Here, the controller 50 may store in advance the position of the manipulation part 30, i.e., the positions of the manipulation lever 32, 33A and the traveling manipulation pedal 33B. Further, the manipulation determination part 51 may calculate the position based on the image information concerning the manipulation part 30 taken by the image taking part. The manipulation determination part 51 can calculate, based on the image information, the position of the hand and the position of the foot of the operator by employing, for example, template matching. However, the manipulation determination part 51 may adopt other known image processing way of calculating, based on the image information, the position of the hand and the position of the foot of the operator without limitation to the template matching.

The distraction determination part 52 determines, based on the image information concerning the image of the operator taken by the image taking part 40, whether the operator is distracted.

Specifically, for example, the distraction determination part 52 determines whether the operator is distracted by calculating, based on the image information concerning the image of the operator taken by the image taking part 40, a visual direction of the operator. The visual direction may represent a direction of the sightline of the operator, or may be a direction of the face of the operator. For instance, the distraction determination part 52 can determine that the operator is not distracted (not in a distraction state) when the calculated visual direction falls within a preset threshold range (e.g., an angle range), and determine that the operator is distracted (in the distraction state) when the calculated visual direction deviates from the threshold range. Based on the image information, the distraction determination part 52 can calculate the direction of the sightline of the operator and calculate the direction of the face of the operator by employing, for example, template matching. However, the distraction determination part 52 may adopt other known image processing way of calculating, based on the image information, the direction of the sightline and the direction of the face of the operator without limitation to the template matching.

The image taking part 40 may include a camera mountable onto, for example, the head of the operator. The camera can track a motion of the sightline of the operator in real time and continuously measure the direction of the sightline (sightline position) of the operator, and further may constitute an eye-tracking device in cooperation with the distraction determination part 52.

The sitting determination part 53 determines, based on the image information concerning the image of the operator taken by the image taking part 40, whether the operator is sitting on the operator seat 31.

Specifically, the sitting determination part 53 can calculate, based on the image information concerning the image of the operator taken by the image taking part 40, the posture of the operator, and determine that the operator is sitting (in the sitting state) when the calculated posture falls within a preset permissible posture range and determine that the operator is not sitting (not in the sitting state) when the calculated posture deviates from the permissible posture range. The sitting determination part 53 can calculate, based on the image information, the posture of the operator by employing, for example, template matching. However, the sitting determination part 53 may adopt other known image processing way of calculating, based on the image information, the posture of the operator without limitation to the template matching.

The image taking part 40 may be configured to take an image of an unillustrated marker wearable by the operator and catch a motion of the marker. In this case, the sitting determination part 53 can determine, based on image information concerning the image of the operator (information concerning the image of the motion of the marker) taken by the image taking part 40, whether the operator is sitting. For instance, the marker is mountable onto at least one of the head, the chest, and the waist of the operator.

The operation control part 54 controls an operation of the hydraulic excavator 100. The operation control part 54 is configured to suspend an operation, among operations of the hydraulic excavator 100, corresponding to a manipulation applied to the manipulation part 30 in at least one of a case where the manipulation determination part 51 determines that the manipulation part 30 is not manipulated by the operator and a case where the distraction determination part 52 determines that the operator is distracted. In this case, the operation control part 54 avoids inputting a valve-opening instructive signal to the pilot port of the attachment switch valve 73 or the pilot port of the traveling switch valve 74.

When at least one of a determination by the manipulation determination part 51 and a determination by the distraction determination part 52 is impossible, the notification control part 55 is configured to control the notification device 60 to notify the operator of determination information concerning the determination. Specific contents of the determination information notified by the notification device 60 are not particularly limited, and may include the following exemplary information. Specifically, the determination information includes, for example, a sound, a character, or a shape indicating that a determination was impossible. The determination information may include specific contents, e.g., a fact that a determination by the manipulation determination part 51 was impossible, a fact that a determination by the distraction determination part 52 was impossible, or other fact.

For instance, the posture of the operator frequently changes during a work of the hydraulic excavator 100. Besides, different operators wear different things, i.e., garments, eyeglasses, sunglasses and other things. Moreover, each operator may manipulate the two manipulation levers with his/her both hands, or manipulate one of the manipulation levers with a corresponding one of the hands. Furthermore, a part of the operator's body (e.g., face) may not fall within the field of view of the image taking part 40 depending on a posture of the operator.

It is seen from these perspectives that a manipulation situation of the operator, a posture of the operator, or what the operator wears may cause a reduction in an accuracy of the determination by each of the manipulation determination part 51 and the distraction determination part 52 based on the image information concerning the image of the operator taken by the image taking part 40. Under the circumstances, the determination information is notified to the operator when a proper determination is impossible due to the reduction in the determination accuracy in the embodiment. This notification allows the operator to recognize that the determination is impossible and take an appropriate way. In the embodiment, when a proper determination is impossible due to the decrease in the determination accuracy, the determination information is notified to the operator, and further an operation, among the operations of the construction machine, corresponding to a manipulation applied to the manipulation part 30 is permitted without being suspended. This configuration permits the construction machine to more smoothly operate by suppressing frequent suspensions of the operations of the construction machine while causing the operator to recognize that the determination is impossible.

A cause that makes a determination impossible is not particularly limited. Examples of a case that a determination by the manipulation determination part 51 is impossible and those of a case that a determination by the distraction determination part 52 is impossible will be described in detail below.

For instance, image information concerning an image of the operator taken by the image taking part 40 does not contain information concerning a determination target, e.g., a part of the operator's body or anything other than the operator. In this case, a determination by each of the manipulation determination part 51 and the distraction determination part 52 is impossible. Hereinafter, more details will be described.

### Case A

The image information contains information indicating that one of the manipulation levers of the manipulation part 30 is held by corresponding one hand of the operator, but does not contain information indicating that the other manipulation lever of the manipulation part 30 is held by the other hand of the operator. In this case, the manipulation determination part 51 cannot make a proper determination, based on the image information, as to whether the manipulation part 30 is manipulated by the operator. Accordingly, the determination information is notified to the operator, and an operation corresponding to the manipulation applied to the manipulation part 30 is permitted without being suspended.

### Case B

The image information contains information indicating that a part of the operator's body other than a palm or anything other than the operator is in contact with the manipulation lever. In this case, the manipulation determination part 51 can make a proper determination. Accordingly, an operation of the construction machine corresponding to a manipulation applied to the manipulation part 30 is suspended.

### Case C

The image information does not contain the face of the operator. In this case, the distraction determination part 52 cannot make a proper determination, based on the image information, as to whether the operator is distracted. Accordingly, the determination information is notified to the operator, and an operation corresponding to the manipulation applied to the manipulation part 30 is permitted without being suspended.

### Case D

The image information contains the face of the operator, and besides, the operator wears, for example, sunglasses. In this case, the image information contains information concerning a part of a determination target of the operator's body, i.e., information concerning the sunglasses over the eyes of the operator. The distraction determination part 52 cannot specify a sightline direction of the operator due to the sunglasses, and thus makes a proper determination, based on the image information, that the operator is distracted. Accordingly, an operation of the construction machine corresponding to a manipulation applied to the manipulation part 30 is suspended.

Such a case where each of the manipulation determination part 51 and the distraction determination part 52 can make a proper determination or cannot make a proper determination is not limited to Cases A to D described above.

Other causes that makes the determination impossible may involve a case of an inconvenience, e.g., a dirt on a lens of each of the cameras, 41, 42 constituting the image taking part 40. In this case, the operator can recognize the determination information notified by the notification device 60, and take an appropriate way of, for example, wiping the dirt off the lens.

### Control operation

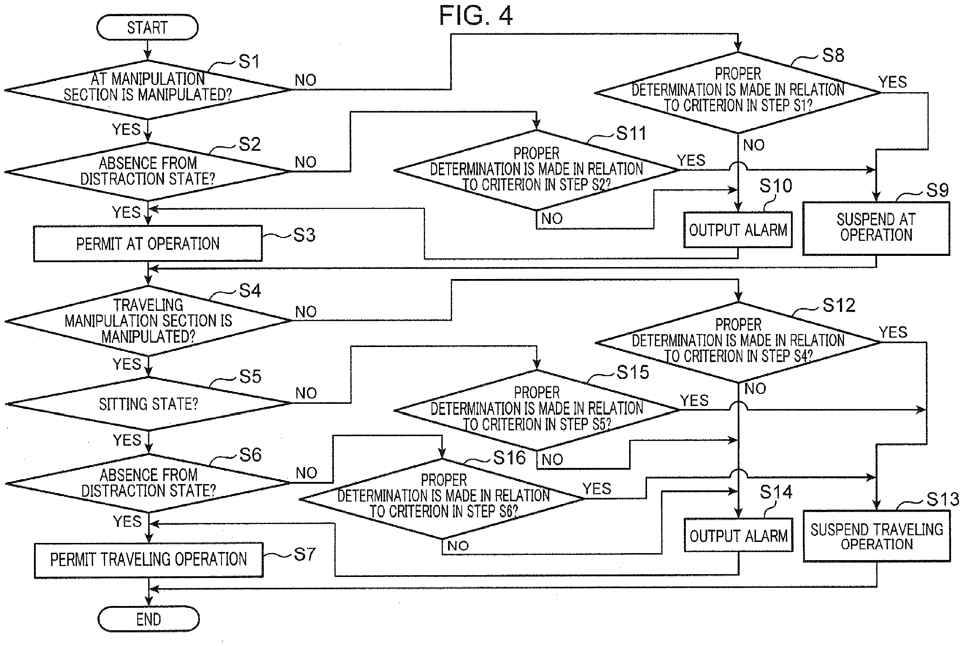

Fig. 4 is a flowchart showing an arithmetic control operation to be executed by the controller 50 of the operation control system 101. The operator manipulates the lock lever 46 of the lock mechanism 45 to change to the first posture shown in Fig. 2 when the hydraulic excavator 100 starts driving. This change allows a supply of the hydraulic fluid from the pilot pump 72 to each of the attachment switch valve 73 and the traveling switch valve 74.

As shown in Fig. 4, the manipulation determination part 51 of the controller 50 determines, based on image information concerning an image of the operator taken by the image taking part 40, whether the attachment manipulation section 32 is manipulated by the operator, specifically, held by the operator (step S1).

When the manipulation determination part 51 determines that the attachment manipulation section 32 is held by the operator ("YES" in step S1), the distraction determination part 52 determines, based on the image information concerning the image of the operator taken by the image taking part 40, whether the operator is distracted (step S2).

When the distraction determination part 52 determines that the operator is absent from distraction ("YES" in step S2), the operation control part 54 permits an operation of the attachment 6 (in step S3). Specifically, in this case, the operation control part 54 inputs a valve-opening instructive signal to the pilot port of the attachment switch valve 73. This causes the attachment switch valve 73 to open and allows the hydraulic fluid to flow from the pilot pump 72 to the attachment remote control valve 75.

Next, the manipulation determination part 51 determines, based on the image information concerning the image of the operator taken by the image taking part 40, whether the traveling manipulation lever 33A, 33A is held by the operator and whether a foot of the operator is put on the traveling manipulation pedal 33B, 33B (step S4).

When the manipulation determination part 51 determines that the traveling manipulation lever 33A, 33A is held by the operator, or that the foot of the operator is put on the traveling manipulation pedal 33B, 33B ("YES" in step S4), the sitting determination part 53 determines, based on the image information concerning the image of the operator taken by the image taking part 40, whether the operator is sitting on the operator seat 31 (step S5).

When the sitting determination part 53 determines that operator is sitting on the operator seat 31 ("YES" in step S5), the distraction determination part 52 determines, based on the image information concerning the image of the operator taken by the image taking part 40, whether the operator is distracted (step S6).

When the distraction determination part 52 determines that the operator is absent from distraction ("YES" in step S6), the operation control part 54 permits an operation of the traveling device 1a (in step S7). Specifically, in this case, the operation control part 54 inputs a valve-opening instructive signal to the pilot port of the traveling switch valve 74. This causes the traveling switch valve 74 to open and allows the hydraulic fluid to flow from the pilot pump 72 to the traveling remote control valve 76.

In contrast, when the manipulation determination part 51 does not determine in step S1 that the attachment manipulation section 32 is held by the operator ("NO" in step S1), the manipulation determination part 51 determines whether a proper determination is made in relation to a determination criterion in step S1 (step S8).

Here, such cases where it is not determined that the attachment manipulation section 32 is held by the operator ("NO" in step S1) involve a case where the attachment manipulation section 32 is not held by the operator and a case where it is unsure whether the attachment manipulation section 32 is held by the operator due to no proper determination in relation to the determination criterion in step S1.

When the manipulation determination part 51 determines that a proper determination is made in relation to the determination criterion in step S1 ("YES" in step S8), the operation control part 54 suspends the operation of the attachment 6 (in step S9). The controller 50 proceeds to step S4 and subsequent steps.

Specifically, when the manipulation determination part 51 does not determine that the attachment manipulation section 32 is held by the operator ("NO" in step S1) and the manipulation determination part 51 determines that a proper determination is made in relation to the determination criterion in step S1 ("YES" in step S8, e.g., Case B), the operation of the attachment 6 is suspended (step S9). Specifically, in this case, the operation control part 54 inputs no valve-opening instructive signal to the pilot port of the attachment switch valve 73. This keeps the attachment switch valve 73 closed and blocks a supply of the hydraulic fluid from the pilot pump 72 to the attachment remote control valve 75.

When the manipulation determination part 51 determines that no proper determination is made in relation to the determination criterion in step S1 ("NO" in step S8, e.g., Case A}, the notification control part 55 controls the notification device 60 to notify the operator of determination information concerning the determination (step S10). Furthermore, the operation control part 54 permits the operation of the attachment 6 (step S3).

In other words, when the manipulation determination part 51 does not determine that the attachment manipulation section 32 is held by the operator ("NO" in step S1) and the manipulation determination part 51 determines that no proper determination is made in relation to the determination criterion in step S1 ("NO" in step S8), the operation of the attachment 6 is suspended (step S3).

When the distraction determination part 52 does not determine in step S2 that the operator is absent from distraction ("NO" in step S2), the distraction determination part 52 determines whether a proper determination is made in step S2 in relation to a determination criterion in step S2 (step S11).

Here, such cases where it is not determined that the operator is absent from distraction ("NO" in step S2) involve a case where the operator is distracted and a case where it is unsure whether the operator is distracted due to no proper determination in relation to the determination criterion in step S2.

When the distraction determination part 52 determines that a proper determination is made in relation to the determination criterion in step S2 ("YES" in step S11, e.g., Case D), the operation control part 54 suspends the operation of the attachment 6 (in step S9), and the controller 50 proceeds to step S4 and subsequent steps.

Specifically, when the distraction determination part 52 does not determine that the operator is absent from distraction ("NO" in step S2) and the distraction determination part 52 determines that a proper determination is made in relation to the determination criterion in step S2 ("YES" in step S11), the operation of the attachment 6 is suspended (step S9).

When the distraction determination part 52 determines that no proper determination is made in relation to the determination criterion in step S2 ("NO" in step S11, e.g., Case C), the notification control part 55 controls the notification device 60 to notify the operator of determination information concerning the determination (step S10), and the operation control part 54 permits the operation of the attachment 6 (step S3).

Specifically, when the distraction determination part 52 does not determine that the operator is absent from distraction ("NO" in step S2) and the distraction determination part 52 determines that no proper determination is made in relation to the determination criterion in step S2 ("NO" in step S11), the operation of the attachment 6 is permitted without being suspended (step S3).

When the manipulation determination part 51 does not determine in step S4 that the traveling manipulation lever 33A, 33A is held by the operator, and that the foot of the operator is put on the traveling manipulation pedal 33B, 33B ("NO" in step S4), the manipulation determination part 51 determines whether a proper determination is made in step S4 in relation to a determination criterion in step S4 (step S12).

Here, such cases where the manipulation determination part 51 does not determine that the traveling manipulation lever 33A, 33A is held by the operator and that the foot of the operator is put on the traveling manipulation pedal 33B, 33B ("NO" in step S4) involve a case where the traveling manipulation lever 33A, 33A is not held by the operator and the foot of the operator is not put on the traveling manipulation pedal 33B, 33B, and a case where it is unsure whether the traveling manipulation lever 33A, 33A is held by the operator and the foot of the operator is put on the traveling manipulation pedal 33B, 33B due to no proper determination by the manipulation determination part 51 in relation to the determination criterion in step S4.

When the manipulation determination part 51 determines that a proper determination is made in relation to the determination criterion in step S4 ("YES" in step S12), the operation control part 54 suspends an operation of the traveling device 1a (in step S13).

Specifically, when the manipulation determination part 51 does not determine that the traveling manipulation section 33 is manipulated by the operator ("NO" in step S4) and the manipulation determination part 51 determines that a proper determination is made in relation to the determination criterion in step S4 ("YES" in step S12), the operation of the traveling device 1a is suspended (step S13). In this case, the operation control part 54 inputs no valve-opening instructive signal to the pilot port of the traveling switch valve 74.

When the manipulation determination part 51 determines that no proper determination is made in relation to the determination criterion in step S4 ("NO" in step S12), the notification control part 55 controls the notification device 60 to notify the operator of determination information concerning the determination (step S14), and the operation control part 54 permits the operation of the traveling device 1a (step S7).

Specifically, when the manipulation determination part 51 does not determine that the traveling manipulation section 33 is manipulated by the operator ("NO" in step S4) and the manipulation determination part 51 determines that no proper determination is made in relation to the determination criterion in step S4 ("NO" in step S12), the operation of the traveling device la is permitted without being suspended (step S7).

Further, when the sitting determination part 53 does not determine in step S5 that the operator is sitting on the operator seat 31 ("NO" in step S5), the sitting determination part 53 determines whether a proper determination is made in step S5 in relation to a determination criterion in step S5 (step S15).

Here, such cases where it is not determined that the operator is sitting on the operator seat 31 ("NO" in step S5) involve a case where the operator is not sitting on the operator seat 31 and a case where it is unsure whether the operator is sitting on the operator seat 31 due to no proper determination in relation to the determination criterion in step S5.

When the sitting determination part 53 determines that a proper determination is made in relation to the determination criterion in step S5 ("YES" in step S15), the operation control part 54 suspends the operation of the traveling device la (in step S13).

Specifically, when the sitting determination part 53 does not determine that the operator is sitting on the operator seat 31 ("NO" in step S5) and the sitting determination part 53 determines that a proper determination is made in relation to the determination criterion in step S5 ("YES" in step S15), the operation of the traveling device 1a is suspended (step S13). In this case, the operation control part 54 inputs no valve-opening instructive signal to the pilot port of the traveling switch valve 74.

When the sitting determination part 53 determines that no proper determination is made in relation to the determination criterion in step S5 ("NO" in step S15), the notification control part 55 controls the notification device 60 to notify the operator of determination information concerning the determination (step S14), and the operation control part 54 permits the operation of the traveling device 1a (step S7).

In other words, when the sitting determination part 53 does not determine that the operator is sitting on the operator seat 31 ("NO" in step S5) and the sitting determination part 53 determines that no proper determination is made in relation to the determination criterion in step S5 ("NO" in step S15), the operation of the traveling device 1a is permitted without being suspended (step S7).

Further, when the distraction determination part 52 does not determine in step S6 that the operator is absent from distraction ("NO" in step S6), the distraction determination part 52 determines whether a proper determination is made in step S6 in relation to a determination criterion in step S6 (step S16).

When the distraction determination part 52 determines that a proper determination is made in relation to the determination criterion in step S6 ("YES" in step S16), the operation control part 54 suspends the operation of the traveling device 1a (in step S13).

When the distraction determination part 52 determines that no proper determination is made in relation to the determination criterion in step S6 ("NO" in step S16), the notification control part 55 controls the notification device 60 to notify the operator of determination information concerning the determination (step S14), and the operation control part 54 permits the operation of the traveling device 1a (step S7).

In the operation control system 101 according to the embodiment described above, each of the manipulation determination part 51 and the distraction determination part 52 makes a determination based on image information concerning an image of the operator taken by the image taking part 40. An operation of the hydraulic excavator 100, corresponding to a manipulation applied to the manipulation part 30, is suspended in at least one of a case where it is determined that the manipulation part 30 is not manipulated by the operator and a case where it is determined that the operator is distracted. This simple configuration can prevent a false operation of the hydraulic excavator 100 attributed to an inadvertent contact of a part of an operator's body with the manipulation part 30 contrary to an operator's intension, and another false operation of the hydraulic excavator 100 attributed to a distracted manipulation of the operator.

The operation control system 101 according to the embodiment further includes the sitting determination part 53 which determines, based on the image information concerning the image of the operator taken by the image taking part 40, whether the operator is sitting on the operator seat 31. The operation control part 54 suspends an operation of the traveling device 1a when the sitting determination part 53 determines that the operator is not sitting on the operator seat 31. Hence, the operation of the traveling device 1a is suspended due to a contact of a part of the operator's body with the traveling manipulation lever 33A or the traveling manipulation pedal 33B in a standing posture of the operator instead of the sitting posture thereof. Accordingly, a false operation of the traveling device 1a that is unintended by the operator can be prevented.

In the embodiment, the operation control part 54 permits the operation of the attachment 6 despite sitting or not-sitting of the operator on the operator seat 31 when the manipulation determination part 51 does not determine that the manipulation part 30 (specifically, the attachment manipulation lever 32) is not held by the operator. Specifically, the operation control part 54 permits an operation of the attachment 6 when the sitting determination part 53 determines that the operator is not sitting on the operator seat 31 and the manipulation determination part 51 does not determine that the attachment manipulation lever 32 is not held by the operator. Hence, the operation of the attachment 6 is permitted when the attachment manipulation section 32 is manipulated by the operator taking the standing posture instead of the sitting posture. Accordingly, for instance, the operator in the standing posture can perform the attachment operation while looking down the front of the cab 7. This results in improving the convenience.

Here, such cases where the manipulation determination part 51 does not determine that the attachment manipulation lever 32 (attachment manipulation section) is not held by the operator involve a case where the manipulation determination part 51 determines that the attachment manipulation lever 32 is held by the operator (e.g. "YES" in step S1 in Fig. 4), and a case where the manipulation determination part 51 does not determine that the attachment manipulation lever 32 is held by the operator (e.g., "NO" in step S1 in Fig. 4) and the manipulation determination part 51 determines that no proper determination is made in relation to the determination criterion in step S1 ("NO" in step S8).

In the embodiment, the operation control system 101 further includes the lock mechanism 45 which shifts between an operation permission state of permitting an operation of the hydraulic excavator 100 in response to a manipulation of the operator and an operation suspension state of suspending the operation of the hydraulic excavator 100. The operation of the hydraulic excavator 100 is suspended regardless of a determination by each of the manipulation determination part 51 and the distraction determination part 52 when the lock mechanism 45 is in the operation suspension state. The operator shifts the state of the lock mechanism 45 to the operation permission state when having a will of executing a work of the hydraulic excavator 100, and shifts the state of the lock mechanism 45 to the operation suspension state when having no will of executing the work of the hydraulic excavator 100. In the embodiment, when the lock mechanism 45 is in the operation suspension state, that is, the operator has no will of executing the work of the hydraulic excavator 100, the operation of the hydraulic excavator 100 is suspended regardless of a determination by each of the manipulation determination part 51 and the distraction determination part 52. Consequently, it is possible to reliably prevent an occurrence of a false operation of the hydraulic excavator 100 that is unintended by the operator, and improve the safety.

In the embodiment, the operation control system 101 further includes the notification device 60 which notifies the operator of information, and the notification control part 55 which controls the notification device 60. Moreover, when at least one of a determination by the manipulation determination part 51 and a determination by the distraction determination part 52 is impossible, the notification control part 55 controls the notification device 60 to notify the operator of determination information concerning the determination. This notification allows the operator to recognize that the determination is impossible and take an appropriate way.

### Modifications

The present invention should not be limited to the embodiment described above. The present invention covers, for example, aspects to be described below.

### (A) Remote operation

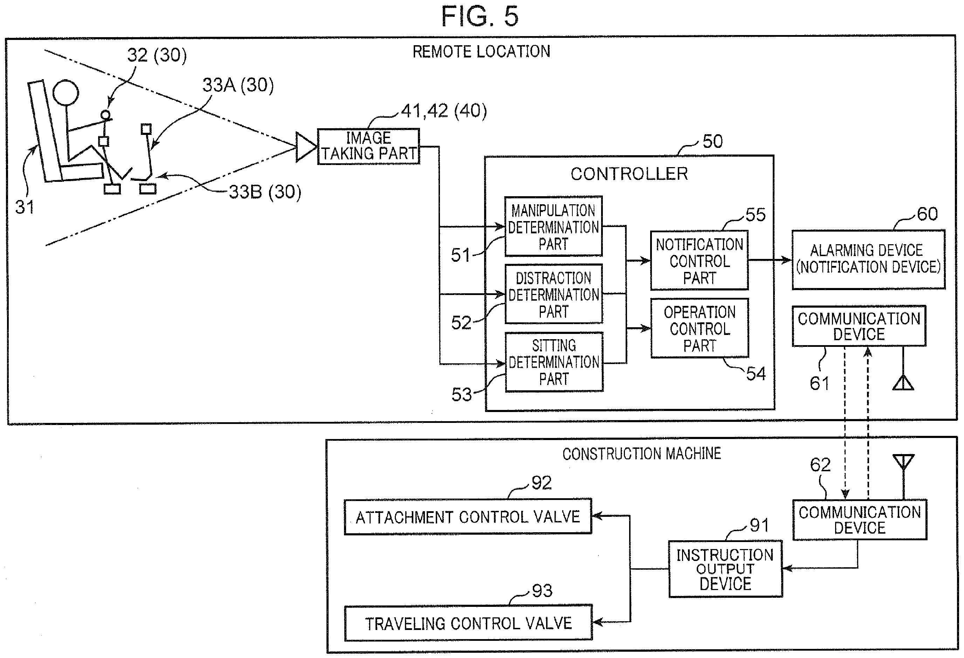

Fig. 5 is a block diagram showing a system configuration of a modified operation control system 101. As shown in Fig. 5, an operation control system for a construction machine according to the present invention is adoptable for a remote operation of the construction machine in a remote location away from the construction machine.

Like the operation control system 101 according to the embodiment shown in Fig. 3, the modified operation control system 101 shown in Fig. 5 includes, a manipulation part 30, an operator seat 31, an unillustrated lock mechanism, an image taking part 40, a notification device 60, and a controller 50. These elements are arranged in the remote location. Like the operation control system 101 according to the embodiment shown in Fig. 3, the controller 50 further operably includes, a manipulation determination part 51, a distraction determination part 52, a sitting determination part 53, an operation control part 54, and a notification control part 55.

The modified operation control system 101 differs from the operation control system 101 according to the embodiment shown in Fig. 3 in including communication devices 61, 62.

An instructive signal from the operation control part 54 is input to an instruction outputting device 91 (construction machine controller) provided in the construction machine via the communication devices 61, 62. An attachment proportional valve 92 (attachment control valve) and a traveling proportional valve 93 (traveling control valve) of the construction machine are controlled in response to the input instructive signal. The attachment 6 and the traveling device 1a are consequently operated.

Details of an arithmetic control operation of the controller 50 of the modified operation control system 101 shown in Fig. 5 will be omitted. However, it should be noted that an operation similar to the control operation represented by the flowchart shown in Fig. 4 is executed in the modification as well.

### (B) Manipulation part and manipulation determination part

In the embodiment, the manipulation part 30 includes the attachment manipulation section 32 and the traveling manipulation section 33A, 33B. Besides, the manipulation determination part 51 is configured to determine whether the attachment manipulation section 32 is manipulated by the operator, and whether the traveling manipulation section 33A, 33B is manipulated by the operator, but should not be limited to this configuration. In the operation control system according to the present invention, the manipulation part may include only one of the attachment manipulation section and the traveling manipulation section. In this case, the manipulation determination part may determine whether the one manipulation section is manipulated by the operator. Furthermore, in the operation control system according to the present invention, the manipulation part may include a further manipulation section (to which a manipulation of the operator is applied to operate a part of the construction machine) other than the attachment manipulation section and the traveling manipulation section.

### (C) Image taking part

In the embodiment, the image taking part 40 includes the plurality of cameras 41, 42, but should not be limited to the configuration, and may include a single camera.

### (D) Sitting determination part and notification control part

In the operation control system according to the present invention, at least one of the sitting determination part 53 and the notification control part 55 is excludable.

### (E) Construction machine

The operation control system according to the invention is widely adaptable to other construction machines, e.g., cranes and dozers, in addition to the exemplary hydraulic excavator 100 in the embodiment.

### Summary of embodiments

The technical features of the embodiments will be summarized below.

The present inventor has focused on characteristic postures taken by an operator to a manipulation part when the operator manipulates the manipulation part. Specifically, for instance, in a case where the manipulation part serves as a manipulation lever, the operator takes a characteristic posture of holding the manipulation lever by extending his/her arm forward. Alternatively, for instance, in another case where the manipulation part serves as a traveling manipulation pedal, the operator takes a characteristic posture of depressing the traveling manipulation pedal on his/her sole by extending his/her foot forward. The image taking part can take an image of the characteristic posture in the manipulation of the manipulation part. Image information of the taken image is adoptable for determining whether the manipulation part is manipulated by the operator. In this way, the image information of the image concerning the operator taken by the image taking part is available for both the determination as to whether the manipulation part is manipulated by the operator and the determination as to whether the operator is distracted. This eliminates the need for a plurality of sensors including a pressure sensor, a touch sensor, and other sensors for each determination. The simple configuration can prevent a false operation of the construction machine attributed to an inadvertent contact of a part of an operator's body or anything other than the operator with a manipulation part contrary to an operator's intension, and another false operation of the construction machine attributed to a distracted manipulation of the operator.

The present invention has been achieved in view of the foregoing. Provided according to the present invention is an operation control system for a construction machine including an attachment and a traveling device. The operation control system includes: an operator seat which allows an operator to sit thereon; a manipulation part to which a manipulation of the operator is applied to operate the construction machine; an image taking part which takes an image of the operator; a manipulation determination part which determines, based on image information concerning the image of the operator taken by the image taking part, whether the manipulation part is manipulated by the operator; a distraction determination part which determines, based on the image information concerning the image of the operator taken by the image taking part, whether the operator is distracted; and an operation control part which suspends an operation, among operations of the construction machine, corresponding to a manipulation applied to the manipulation part in at least one of a case where the manipulation determination part determines that the manipulation part is not manipulated by the operator and a case where the distraction determination part determines that the operator is distracted.

The operation control system causes each of the manipulation determination part and the distraction determination part to make a determination based on the image information concerning the image of the operator taken by the image taking part. An operation, among operations of the construction machine, corresponding to the manipulation applied to the manipulation part is suspended in at least one of a case where it is determined that the manipulation part is not manipulated by the operator and a case where it is determined that the operator is distracted. The simple configuration can prevent a false operation of the construction machine attributed to an inadvertent contact of a part of the operator's body or anything other than the operator with the manipulation part contrary to an operator's intension, and another false operation of the construction machine attributed to a distracted manipulation of the operator.

According to the present invention, the manipulation applied to the manipulation part among the operations of the construction machine covers, in addition to the manipulation of the operator, a manipulation applied to the manipulation part contrary to an operator's intension due to an inadvertent contact of anything other than the operator with the manipulation part.

Specifically, in the operation control system for the construction machine, the manipulation part may include an attachment manipulation section to which a lever manipulation of the operator is applied to operate the attachment. The manipulation determination part may be configured to determine, based on the image information concerning the image of the operator taken by the image taking part, whether the attachment manipulation section is held by the operator. The operation control part may be configured to suspend an operation of the attachment, among the operations of the construction machine, corresponding to a manipulation applied to the attachment manipulation section when the manipulation determination part determines that the attachment manipulation section is not held by the operator.

In this aspect, an operation of the attachment, among the operations of the construction machine, corresponding to the manipulation applied to the attachment manipulation section is suspended when the attachment manipulation section is not held by the operator.

In the operation control system for the construction machine, the manipulation part may include a traveling manipulation section to which a lever manipulation or a pedal manipulation of the operator is applied to operate the traveling device. The manipulation determination part may be configured to determine, based on the image information concerning the image of the operator taken by the image taking part, whether the traveling manipulation section is held by the operator and whether a foot of the operator is put on the traveling manipulation section. The operation control part may be configured to suspend an operation of the traveling device, among the operations of the construction machine, corresponding to a manipulation applied to the traveling manipulation section when the operation determination part determines that the traveling manipulation section is not held by the operator and that the foot of the operator is not put on the traveling manipulation section.

In this aspect, an operation of the traveling device, among the operations of the construction machine, corresponding to the manipulation applied to the traveling manipulation section is suspended when the traveling manipulation section (e.g., traveling manipulation lever) is not held by the operator and the foot of the operator is not put on the traveling manipulation section (e.g., the traveling pedal).

The operation control system for the construction machine may include a sitting determination part which determines, based on the image information concerning the image of the operator taken by the image taking part, whether the operator is sitting on the operator seat. The operation control part may be configured to suspend an operation of the traveling device when the sitting determination part determines that the operator is not sitting on the operator seat.

In this aspect, the operation of the traveling device is suspended due to a contact of a part of the operator's body with the traveling manipulation lever and/or the traveling manipulation pedal in a standing posture of the operator instead of the sitting posture thereof. Accordingly, a false operation of the traveling device that is unintended by the operator can be prevented.

The operation control system for the construction machine preferably includes a sitting determination part which determines, based on the image information concerning the image of the operator taken by the image taking part, whether the operator is sitting on the operator seat. The operation control part preferably permits the operation of the attachment when the sitting determination part determines that the operator is not sitting on the operator seat and the manipulation determination part does not determine that the manipulation part is not held by the operator.

In this aspect, the operation of the attachment is permitted when the attachment manipulation section is manipulated by the operator in the standing posture instead of the sitting posture. Accordingly, for instance, the operator can perform the attachment operation while looking down the front of the cab in the standing posture.

The operation control system preferably further includes a lock mechanism which shifts between an operation permission state of permitting an operation of the construction machine in response to a manipulation of the operator and an operation suspension state of suspending the operation of the construction machine. The operation of the construction machine is preferably suspended regardless of a determination by the manipulation determination part and a determination by the distraction determination part when the lock mechanism is in the operation suspension state.

The operator shifts the state of the lock mechanism to the operation permission state when having a will of executing a work of the construction machine, and shifts the state of the lock mechanism to the operation suspension state when having no will of executing the work of the construction machine. In this aspect, when the lock mechanism is in the operation suspension state, that is, when the operator has no will of executing the work of the construction machine, the operation of the construction machine is suspended regardless of the determination by the manipulation determination part and the determination by the distraction determination part. Consequently, it is possible to reliably prevent an occurrence of a false operation of the construction machine that is unintended by the operator, and improve the safety.

The operation control system for the construction machine preferably further includes a notification device which notifies the operator of information, and a notification control part which controls the notification device. When at least one of a determination by the manipulation determination part and a determination by the distraction determination part is impossible, the notification control part preferably controls the notification device to notify the operator of determination information concerning the determination.

For instance, the posture of the operator frequently changes during a work of the construction machine. Besides, different operators wear different things, i.e., garments, eyeglasses, sunglasses, and other things. It is seen from these perspectives that a posture of the operator or what the operator wears may cause a reduction in an accuracy of the determination by each of the manipulation determination part and the distraction determination part based on the image information. Under the circumstances, in the aspect, when at least one of a determination by the manipulation determination part and a determination by the distraction determination part is impossible, the notification device notifies the operator of determination information concerning the determination. This notification allows the operator to recognize that the determination is impossible and take an appropriate way.

Conclusively, the operation control system having the simple configuration for the construction machine according to the present invention can prevent a false operation of the construction machine attributed to an inadvertent contact of a part of an operator's body or anything other than the operator with a manipulation part, e.g., a manipulation lever, contrary to an operator's intension, and another false operation of the construction machine attributed to a distracted manipulation of the operator.

## Claims

1. An operation control system (101)
for a construction machine (100) including an attachment (6) and a traveling device (1a), comprising:
an operator seat (31) which allows an operator to sit thereon;
a manipulation part (30) to which a manipulation of the operator is applied to operate the construction machine;
an image taking part (40) which takes an image of the operator;
a manipulation determination part (51) which determines, based on image information concerning the image of the operator taken by the image taking part, whether the manipulation part is manipulated by the operator;
a distraction determination part (52) which determines, based on the image information concerning the image of the operator taken by the image taking part, whether the operator is distracted; and
an operation control part (54) which suspends an operation, among operations of the construction machine, corresponding to a manipulation applied to the manipulation part in at least one of a case where the manipulation determination part determines that the manipulation part is not manipulated by the operator and a case where the distraction determination part determines that the operator is distracted;
**characterised by**:
a lock mechanism (45) which shifts between an operation permission state of permitting an operation of the construction machine in response to a manipulation of the operator and an operation suspension state of suspending the operation of the construction machine, the operation of the construction machine being suspended regardless of a determination by the manipulation determination part and a determination by the distraction determination part when the lock mechanism is in the operation suspension state.

2. The operation control system (101) for a construction machine (100) according to claim 1, wherein
the manipulation part (30) includes an attachment manipulation section (32) to which a lever manipulation of the operator is applied to operate the attachment,
the manipulation determination part (51) is configured to determine, based on the image information concerning the image of the operator taken by the image taking part, whether the attachment manipulation section is held by the operator, and
the operation control part (54) is configured to suspend an operation of the attachment, among the operations of the construction machine, corresponding to a manipulation applied to the attachment manipulation section when the manipulation determination part determines that the attachment manipulation section is not held by the operator.

3. The operation control system (101) for a construction machine (100) according to claim 1 or 2, wherein
the manipulation part (30) includes a traveling manipulation section (33) to which a lever manipulation or a pedal manipulation of the operator is applied to operate the traveling device,
the manipulation determination part (51) is configured to determine, based on the image information concerning the image of the operator taken by the image taking part, whether the traveling manipulation section is held by the operator and whether a foot of the operator is put on the traveling manipulation section, and
the operation control part (54) is configured to suspend an operation of the traveling device (1a), among the operations of the construction machine (100), corresponding to a manipulation applied to the traveling manipulation section when the operation determination part determines that the traveling manipulation section is not held by the operator and that the foot of the operator is not put on the traveling manipulation section.

4. The operation control system (101) for a construction machine (100) according to any one of claims 1 to 3, further comprising:
a sitting determination part (53) which determines, based on the image information concerning the image of the operator taken by the image taking part (40), whether the operator is sitting on the operator seat (31), wherein
the operation control part (54) is configured to suspend an operation of the traveling device when the sitting determination part determines that the operator is not sitting on the operator seat.

5. The operation control system for a construction machine according to claim 2, further comprising:
a sitting determination part (53) which determines, based on the image information concerning the image of the operator taken by the image taking part (40), whether the operator is sitting on the operator seat (31), wherein
the operation control part (54) permits the operation of the attachment (6) when the sitting determination part determines that the operator is not sitting on the operator seat and the manipulation determination (51) part does not determine that the attachment manipulation section is not held by the operator.

6. The operation control system (101) for a construction machine (100) according to any one of claims 1 to 5, further comprising:
a notification device (60) which notifies the operator of information; and
a notification control part (55) which controls the notification device, wherein
when at least one of a determination by the manipulation determination part (51) and a determination by the distraction determination part (52) is impossible, the notification control part controls the notification device to notify the operator of determination information concerning the determination.

## Patentansprüche

1. Ein Betriebssteuersystem (101)
für eine Baumaschine (100) mit einem Zusatzgerät (6) und einer Fahrvorrichtung (1a), das folgendes aufweist:
einen Bedienersitz (31), auf dem ein Bediener sitzen kann;
ein Betätigungsteil (30), auf das eine Betätigung des Bedieners angewendet wird, um die Baumaschine zu bedienen;
ein Bildaufnahmeteil (40), das ein Bild des Bedieners aufnimmt;
ein Betätigungsbestimmungsteil (51), das auf der Grundlage von Bildinformationen bezüglich des Bildes des Bedieners, das von dem Bildaufnahmeteil aufgenommen wurde, bestimmt, ob das Betätigungsteil von dem Bediener betätigt wird;
ein Ablenkungsbestimmungsteil (52), das auf der Grundlage der Bildinformationen bezüglich des Bildes des Bedieners, das von dem Bildaufnahmeteil aufgenommen wurde, bestimmt, ob der Bediener abgelenkt ist; und
ein Betriebssteuerungsteil (54), das unter den Betrieben der Baumaschine einen Betrieb gemäß einer auf das Betätigungsteil angewendeten Betätigung in mindestens einem von einem Fall, in dem das Betätigungsbestimmungsteil bestimmt, dass das Betätigungsteil nicht durch den Bediener betätigt wird, und einem Fall, in dem das Ablenkungsbestimmungsteil bestimmt, dass der Bediener abgelenkt ist, unterbricht;
**gekennzeichnet durch**:
einen Verriegelungsmechanismus (45), der zwischen einem Betriebserlaubniszustand, in dem ein Betrieb der Baumaschine als Reaktion auf eine Betätigung des Bedieners zugelassen wird, und einem Betriebsunterbrechungszustand, in dem der Betrieb der Baumaschine unterbrochen wird, wechselt, wobei der Betrieb der Baumaschine unabhängig von einer Bestimmung durch das Betätigungsbestimmungsteil und einer Bestimmung durch das Ablenkungsbestimmungsteil unterbrochen wird, wenn sich der Verriegelungsmechanismus in dem Betriebsunterbrechungszustand befindet.

2. Betriebssteuersystem (101) für eine Baumaschine (100) nach Anspruch 1, wobei
das Betätigungsteil (30) eine Zusatzgerät-Betätigungseinrichtung (32) umfasst, an der eine Hebelbetätigung des Bedieners zum Betätigen des Zusatzgeräts angewendet wird,
das Betätigungsbestimmungsteil (51) so eingerichtet ist, dass es auf der Grundlage der Bildinformationen, die das Bild des Bedieners betreffen, das von dem Bildaufnahmeteil aufgenommen wurde, bestimmt, ob die Zusatzgerät-Betätigungseinrichtung von dem Bediener gehalten wird, und
das Betriebssteuerteil (54) eingerichtet ist, um unter den Betrieben der Baumaschine einen Betrieb des Zusatzgeräts zu unterbrechen, der einer auf die Zusatzgerät-Betätigungseinrichtung ausgeübten Betätigung entspricht, wenn das Betätigungsbestimmungsteil bestimmt, dass die Zusatzgerät-Betätigungseinrichtung nicht vom Bediener gehalten wird.

3. Betriebssteuersystem (101) für eine Baumaschine (100) nach Anspruch 1 oder 2, wobei
das Betätigungsteil (30) eine auslenkbare Betätigungseinrichtung (33) umfasst, auf die eine Hebelbetätigung oder eine Pedalbetätigung des Bedieners angewendet wird, um die Fahrvorrichtung zu betätigen,
das Betätigungsbestimmungsteil (51) eingerichtet ist, um auf der Grundlage der Bildinformationen bezüglich des Bildes des Bedieners, das von dem Bildaufnahmeteil aufgenommen wurde, zu bestimmen, ob die auslenkbare Betätigungseinrichtung von dem Bediener gehalten wird und ob ein Fuß des Bedieners auf die auslenkbare Betätigungseinrichtung gestellt ist, und
das Betriebssteuerteil (54) so eingerichtet ist, dass es einen Betrieb der Fahrvorrichtung (1a) unter den Betrieben der Baumaschine (100) gemäß einer auf die auslenkbare Betätigungseinrichtung ausgeübten Betätigung unterbricht, wenn das Betätigungsbestimmungsteil bestimmt, dass die auslenkbare Betätigungseinrichtung nicht von dem Bediener gehalten wird und dass der Fuß des Bedieners nicht auf den fahrenden Betätigungsabschnitt gestellt ist.

4. Betriebssteuersystem (101) für eine Baumaschine (100) nach einem der Ansprüche 1 bis 3, das ferner folgendes aufweist:
ein Sitzbestimmungsteil (53), das auf der Grundlage der Bildinformationen bezüglich des vom Bildaufnahmeteil (40) aufgenommenen Bildes des Bedieners bestimmt, ob der Bediener auf dem Bedienersitz (31) sitzt, wobei
das Betriebssteuerteil (54) so eingerichtet ist, dass es einen Betrieb der Fahrvorrichtung unterbricht, wenn das Sitzbestimmungsteil bestimmt, dass der Bediener nicht auf dem Bedienersitz sitzt.

5. Betriebssteuersystem für eine Baumaschine nach Anspruch 2, das ferner folgendes aufweist:
ein Sitzbestimmungsteil (53), das auf der Grundlage der Bildinformationen bezüglich des vom Bildaufnahmeteil (40) aufgenommenen Bildes des Bedieners bestimmt, ob der Bediener auf dem Bedienersitz (31) sitzt, wobei
das Betriebssteuerteil (54) den Betrieb des Zusatzgeräts (6) erlaubt, wenn das Sitzbestimmungsteil bestimmt, dass der Bediener nicht auf dem Bedienersitz sitzt, und das Betätigungsbestimmungsteil (51) nicht bestimmt, dass die Zusatzgerät-Betätigungseinrichtung nicht vom Bediener gehalten wird.

6. Betriebssteuersystem (101) für eine Baumaschine (100) nach einem der Ansprüche 1 bis 5, das ferner folgendes aufweist:
eine Benachrichtigungsvorrichtung (60), die dem Bediener Informationen mitteilt; und
ein Benachrichtigungssteuerungsteil (55) das die Benachrichtigungsvorrichtung steuert, wobei
wenn mindestens eine Bestimmung von einer Bestimmung durch das Betätigungsbestimmungsteil (51) und einer Bestimmung durch das Ablenkungsbestimmungsteil (52) unmöglich ist, steuert das Benachrichtigungssteuerungsteil die Benachrichtigungsvorrichtung, um dem Bediener Bestimmungsinformationen über die Bestimmung mitzuteilen.

## Revendications

1. Système de commande d'opération (101) pour un engin de chantier (100) comprenant un accessoire (6) et un dispositif de déplacement (1a) comprenant :
un siège d'opérateur (31) qui permet à un opérateur de s'asseoir ;
une partie de manipulation (30) sur laquelle une manipulation de l'opérateur est appliquée pour utiliser l'engin de chantier ;
une partie de prise d'image (40) qui prend une image de l'opérateur ;
une partie de détermination de manipulation (51) qui détermine, en se basant sur les informations d'image concernant l'image de l'opérateur prise par la partie de prise d'image, si la partie de manipulation est manipulée ou pas par l'opérateur ;
une partie de détermination de distraction (52) qui détermine, en se basant sur les informations d'image concernant l'image de l'opérateur prise par la partie de prise d'image, si l'opérateur est distrait ou pas ; et
une partie de commande d'opération (54) qui suspend une opération, parmi les opérations de l'engin de chantier, correspondant à une manipulation appliquée sur la partie de manipulation dans au moins soit un cas où la partie de détermination de manipulation détermine que la partie de manipulation n'est pas manipulée par l'opérateur, soit un cas où la partie de détermination de distraction détermine que l'opérateur est distrait ;
**caractérisé par**
un mécanisme de verrouillage (45) qui passe entre un état de permission d'opération qui permet une opération de l'engin de chantier en réponse à une manipulation de l'opérateur et un état de suspension d'opération qui suspend l'opération de l'engin de chantier, l'opération de l'engin de chantier étant suspendue quelle que soit une détermination par la partie de détermination de manipulation et une détermination par la partie de détermination de distraction lorsque le mécanisme de verrouillage est dans l'état de suspension d'opération.

2. Système de commande d'opération (101) pour un engin de chantier (100) selon la revendication 1, dans lequel
la partie de manipulation (30) comprend une section de manipulation d'accessoire (32) sur laquelle une manipulation de levier de l'opérateur est appliquée pour actionner l'accessoire,
la partie de détermination de manipulation (51) est configurée de façon à déterminer, en se basant sur les informations d'image concernant l'image de l'opérateur prise par la partie de prise d'image, si la section de manipulation d'accessoire est tenue ou pas par l'opérateur, et
la partie de commande d'opération (54) est configurée de façon à suspendre une opération de l'accessoire, parmi les opérations de l'engin de chantier, correspondant à une manipulation appliquée sur la section de manipulation d'accessoire lorsque la partie de détermination de manipulation détermine que la section de manipulation d'accessoire n'est pas tenue par l'opérateur.

3. Système de commande d'opération (101) pour un engin de chantier (100) selon la revendication 1 ou 2, dans lequel
la partie de manipulation (30) comprend une section de manipulation de déplacement (33) sur laquelle une manipulation de levier ou une manipulation de pédale par l'opérateur est appliquée pour actionner le dispositif de déplacement,
la partie de détermination de manipulation (51) est configurée de façon à déterminer, en se basant sur les informations d'image concernant l'image de l'opérateur prise par la partie de prise d'image, si la section de manipulation de déplacement est tenue ou pas par l'opérateur et si un pied de l'opérateur est placé ou pas sur la section de manipulation de déplacement, et
la partie de commande d'opération (54) est configurée de façon à suspendre une opération du dispositif de déplacement (1a), parmi les opérations de l'engin de chantier (100), correspondant à une manipulation appliquée sur la section de manipulation de déplacement lorsque la partie de détermination d'opération détermine que la section de manipulation de déplacement n'est pas tenue par l'opérateur et que le pied de l'opérateur n'est pas placé sur la section de manipulation de déplacement.

4. Système de commande d'opération (101) pour un engin de chantier (100) selon l'une quelconque des revendications 1 à 3, comprenant en outre :
une partie de détermination de position assise (53) qui détermine, en se basant sur les informations d'image concernant l'image de l'opérateur prise par la partie de prise d'image (40), si l'opérateur est assis ou pas sur le siège de l'opérateur (31),
la partie de commande d'opération (54) étant configurée de façon à suspendre une opération du dispositif de déplacement lorsque la partie de détermination de position assise détermine que l'opérateur n'est pas assis sur le siège de l'opérateur.

5. Système de commande d'opération pour un engin de chantier selon la revendication 2, comprenant en outre :
une partie de détermination de position assise (53) qui détermine, en se basant sur les informations d'image concernant l'image de l'opérateur prise par la partie de prise d'image (40), si l'opérateur est assis ou pas sur le siège de l'opérateur (31),
la partie de commande d'opération (54) permettant l'opération de l'accessoire (6) lorsque la partie de détermination de position assise détermine que l'opérateur n'est pas assis sur le siège de l'opérateur et la partie de détermination de manipulation (51) ne détermine pas que la section de manipulation d'accessoire n'est pas tenue par l'opérateur.

6. Système de commande d'opération (101) pour un engin de chantier (100) selon l'une quelconque des revendications 1 à 5, comprenant en outre :
un dispositif de notification (60) qui notifie des informations à l'opérateur ; et
une partie de commande de notification (55) qui commande le dispositif de notification,
lorsqu'au moins soit une détermination par la partie de détermination de manipulation (51), soit une détermination par la partie de détermination de distraction (52) est impossible, la partie de commande de notification commande le dispositif de notification afin de notifier à l'opérateur les informations de détermination concernant la détermination.
